# EUROPÄISCHE PATENTSCHRIFT

(11) **EP 3 775 615 B1**
(45) Veröffentlichungstag und Bekanntmachung des Hinweises auf die Patenterteilung: **08.06.2022**
(21) Anmeldenummer: 19711844.1
(22) Anmeldetag: 08.03.2019
(51) Int. Cl.: F16H 7/02, F16G 1/28, F16H 55/17

(54) **RIEMENTRIEB**
BELT DRIVE
TRANSMISSION PAR COURROIE

(30) Priorität: 29.03.2018 DE 102018107642
(43) Veröffentlichungstag der Anmeldung: 17.02.2021
(73) Patentinhaber: Arntz Beteiligungs GmbH & Co. KG, 37671 Höxter (DE)
(72) Erfinder: MOHRMANN, Detlef, 33184 Altenbeken (DE)
(74) Vertreter: Gramm, Lins & Partner Patent- und Rechtsanwälte PartGmbB
(86) Internationale Anmeldenummer: PCT/EP2019/055906
(87) Internationale Veröffentlichungsnummer: WO 2019/185330

(56) Entgegenhaltungen:
- EP-B1- 2 245 338
- EP-B1- 2 890 916
- DE-A1- 4 239 300
- DE-B- 1 290 403
- TW-A- 201 641 836
- TW-B- I 577 903
- US-B2- 8 136 827

## Beschreibung

Die Erfindung betrifft einen Riementrieb gemäß dem Oberbegriff von Anspruch 1.

Derartige Riementriebe sind seit langem bekannt und werden beispielsweise in Fahrrädern eingesetzt, um die Tretbewegung von der Tretkurbel auf das angetriebene Hinterrad zu übertragen. Wünschenswert ist dabei grundsätzlich, dass der Riementrieb so schmal und leicht wie möglich ist.

Aus der DE 1 290 403 A1 ist ein gelochter Flachriemen bekannt, bei dem die Nutzlast über Vorsprünge übertragen wird, die in Löcher im Flachriemen eingreifen. Um ein Ausreißen der Löcher im Flachriemen zu vermeiden, Nachteilig am Riementrieb gemäß der DE 1 290 403 A1 sind dessen aufwändige Fertigung und Verschleißneigung.

Eine Riemenführung, die in Form von ein- oder zweiseitigen seitlich zum Zahnriemen angeordneten Bordscheiben auf den Riemenscheiben angeordnet sind, ist insofern nachteilig, als dass die Zahnkränze des Riementriebs dadurch breiter ausgeführt werden müssen als der Riemen selbst. Da Fahrräder häufig in rauen Umgebungsbedingungen eingesetzt werden, ist es wünschenswert, dass der Riementrieb besonders robust ist. Weiterhin weisen Riementriebe den Nachteil auf, dass der Riemen bei einer Überlastung und/oder Unterspannung zum Überspringen neigt.

Aus der US 2011/0049831 A1 und der US 8,136,827 B2 ist ein Riementrieb bekannt, bei dem ein Leitring zur axialen Führung verwendet wird. Der Leitring besitzt einen Durchmesser, der kleiner ist als ein Außendurchmesser des Zahnkranzes. Der Führungsring greift in eine Nut ein, die in den Zähnen des Zahnriemens ausgebildet ist. Ein sehr ähnliches System ist zudem aus der US 8,480,109 B1 bekannt. Nachteilig an derartigen Systemen ist, dass sie vergleichsweise empfindlich gegen Verschmutzung sind.

Aus der DE 10 2010 020 527 A1 ist ein Synchronriemengetriebe bekannt, bei dem die axiale Führung durch einen Steg erfolgt, der zwischen zwei Zähnen des Zahnkranzes ausgebildet ist. An der Stelle, an der dieser Steg existiert, hat der Zahnriemen eine Nut, die durch den Zahn verläuft. Auch ein derartiges System ist vergleichsweise anfällig gegenüber Verschmutzung.

Aus der DE 42 39 300 A1 , welche die Präambel des Anspruchs 1 zeigt, ist ein Zahnriemen bekannt, der Ausnehmungen im Zahngrund aufweist. Damit wird erreicht, dass Luft, die vom Zahn des Zahnkranzes im Zahngrund komprimiert wird, durch die Ausnehmungen entweichen kann, sodass die Geräuschentwicklung minimiert wird. Nachteilig an einem derartigen System ist, dass ein gesondertes System zur axialen Führung notwendig wird.

Aus der DE 11 2009 002 092 T5 ist ein Riementransmissionssystem bekannt, bei dem der Transmissionsriemen Vorsprünge aufweist. Die Vorsprünge greifen in Aussparungen ein, die in der Riemenscheibe gebildet sind. Auch ein derartiges System ist vergleichsweise anfällig gegen Verschmutzung.

Der Erfindung liegt die Aufgabe zu Grunde, einen Riementrieb vorzuschlagen, der einen geringen Verschleiß zeigt und in axialer Richtung gut geführt ist.

Die Erfindung löst das Problem durch einen Riementrieb mit den Merkmalen von Anspruch 1.

Vorteilhaft an diesem Riementrieb ist, dass der Zahnriemen durch die Führungs-Vorsprünge in axialer Richtung beidseitig geführt ist. Etwaige Führungskräfte greifen damit in der Mitte des Zahnriemens an, sodass Bordscheiben grundsätzlich entbehrlich sind. So ist der Antriebs-Zahnkranz und/oder der Abtriebs-Zahnkranz gemäß einer bevorzugten Ausführungsform bordscheibenfrei ausgebildet. Hierunter ist in anderen Worten zu verstehen, dass axial außerhalb der Auflageflächen für den Zahnriemen keine Stützstruktur zum axialen Führen des Zahnriemens vorhanden ist. Dadurch kann die axiale Breite des Gesamtsystems verringert werden, was insbesondere für die Anwendung bei Fahrrädern besonders vorteilhaft ist. Das kann selbst dann gelten, wenn der Zahnriemen etwas breiter ausgeführt wird als bei einem bisherigen Riementrieb.

Vorteilhaft ist des Weiteren, dass die Neigung zum Überspringen bei Unterspannung und/oder Überlast durch die Führungs-Vorsprünge meistens deutlich gemindert werden kann. Die zu überwindende Übersprunghöhe wird in einem Teil der Verzahnung des Zahnriemens um die Höhe des Führungs-Vorsprungs vergrößert. Anders gesagt, wird der Riemen bei Übersprungneigung durch die Führungs-Vorsprünge zusätzlich an den Zähnen des Riemens in seiner Position gehalten.

Vorteilhaft ist zudem, dass ein Fremdkörper, der möglicherweise zwischen den Zahnriemen und den Antriebs- oder Abtriebs-Zahnkranz gelangt ist, durch die Führungs-vorsprünge häufig leichter seitlich nach außen gedrängt werden kann. Auf diese Weise wird der Riementrieb vor Beschädigungen geschützt. Es sei darauf hingewiesen, dass dieser Vorteil eintreten kann, nicht aber muss.

Im Rahmen der vorliegenden Beschreibung wird unter einem Fahrrad insbesondere ein zweirädriges Fahrzeug, das per Muskelkraft bewegbar ist, verstanden. Ein Fahrrad hat zwei Räder, nämlich ein Vorderrad und ein Hinterrad. Unter einem Fahrrad werden insbesondere auch ein Pedelec und ein E-Bike verstanden. Ein Pedelec ist ein Fahrrad, das einen Elektromotor besitzt, der den Fahrer nur dann unterstützt, wenn er gleichzeitig selbst in die Pedale tritt. Unter einem E-Bike wird insbesondere ein Fahrrad verstanden, das einen Elektromotor aufweist, der auch dann ein Drehmoment liefert, wenn der Fahrer nicht in die Pedale tritt.

Unter einer Riemenscheibe wird ein im Betrieb rotierendes Bauteil des Riementriebs verstanden, an dem der Zahnriemen entlang läuft oder das der Zahnriemen umschlingt. Die Riemenscheibe kann entweder ein angetriebener Zahnkranz oder ein abgetriebener Zahnkranz sein oder eine nicht angetriebene Rolle. Der Begriff der Riemenscheibe wird damit als Oberbegriff für diese beschriebenen Ausführungsformen verwendet.

Unter einer Ausnehmung wird eine Struktur verstanden, die von einer Rückenseite des Zahnriemens auf eine der Rückenseite gegenüberliegende Zahnseite des Zahnriemens verläuft. In anderen Worten durchsetzt die Ausnehmung den Riemenrücken des Zahnriemens lokal vollständig.

Unter der radialen Richtung wird die Richtung von einer Drehachse der jeweiligen Riemenscheibe weg verstanden. In einem Kreiskoordinatensystem, dessen Mittelpunkt auf der Drehachse liegt, würde eine Bewegung in radialer Richtung durch eine Änderung der Radialkomponente ohne Änderung des Polarwinkels beschrieben.

Der Riementrieb umfasst zumindest einen Antriebs-Zahnkranz und zumindest einen Abtriebs-Zahnkranz. Wenn in dem folgenden Fall der unbestimmte Artikel verwendet wird, so ist dieser so zu verstehen, dass es möglich ist, dass genau ein entsprechendes Objekt vorhanden ist, es ist aber auch möglich, dass mehr als ein entsprechendes Objekt vorhanden ist.

Es ist möglich, nicht aber notwendig, dass sowohl der Antriebs-Zahnkranz als auch der Abtriebs-Zahnkranz die Führungs-Vorsprünge aufweisen. Es ist auch möglich, dass weder der Antriebs- noch der Abtriebs-Zahnkranz Führungs-Vorsprünge aufweisen. In diesem Fall sind Führungs-Vorsprünge auf einer weiteren Riemenscheibe angeordnet, beispielsweise einer Rückenrolle oder einer Innenrolle.

Gemäß einer bevorzugten Ausführungsform weist der Riemenrücken eine in Umfangsrichtung verlaufende Nut auf und die Ausnehmungen verlaufen in einem Nutgrund der Nut. Vorteilhaft hieran ist, dass die Ausnehmungen so besonders einfach herzustellen sind. Die Nut muss nämlich lediglich hinreichend tief ausgebildet werden, sodass die Nut lokal durch den Zahngrund läuft.

Vorzugsweise besitzen die Antriebs-Zähne des Antriebs-Zahnkranzes Führungs-Vorsprünge. Alternativ oder zusätzlich weist der Abtriebs-Zahnkranz Abtriebs-Zähne auf und auf den Abtriebs-Zähnen sind die Führungs-Vorsprünge angeordnet. Mitunter ist es möglich, dass Vorsprünge sowohl auf den Antriebs-Zähnen als auch auf den Abtriebs-Zähnen angeordnet sind. Vorteilhaft hieran ist, dass eine weitere Riemenscheibe, beispielsweise in Form einer Rolle, zum Zentrieren des Zahnriemens entbehrlich ist.

Vorzugsweise besitzt der Riementrieb eine dritte Riemenscheibe in Form einer Innenrolle, die Führungs-Vorsprünge aufweist. Es ist möglich, nicht aber notwendig, dass die Innenrolle Zähne aufweist, die mit der Verzahnung des Zahnriemens zusammenwirken. Es ist ausreichend, dass die Führungs-Vorsprünge zum Eingreifen in die Ausnehmungen angeordnet sind.

Gemäß einer bevorzugten Ausführungsform sind die Führungs-Vorsprünge zum nutzlastfreien Eingreifen in die Ausnehmungen angeordnet. Die Nutzlast wirkt in Längsrichtung auf den Zahnriemen. Vorzugsweise übertragen die Führungsvorsprünge keine Kräfte in Längsrichtung des Zahnriemens. Die Längsrichtung des Zahnriemens ist die Umfangsrichtung, die Zähne des Zahnriemens verlaufen quer zur Längsrichtung.

Vorzugsweise haben die Führungs-Vorsprünge eine Vorsprung-Höhe in radialer Richtung, die zumindest dem 0,1-fachen, vorzugsweise zumindest dem 0,8-fachen, einer Rückendicke des Riemenrückens entspricht. Die Vorsprung-Höhe wird gemessen von der Zahn-Spitze bis zur Vorsprung-Spitze. In anderen Worten wird die Vorsprung-Höhe gemessen von demjenigen Punkt, der auf Höhe des Zahngrundes des Zahnriemens liegt, wenn der jeweilige Führungs-Vorsprung in eine Ausnehmung eingreift, bis zur Vorsprung-Spitze, also dem radial äußersten Ende des Vorsprungs. In wieder anderen Worten ist die Vorsprung-Höhe diejenige Strecke, um die der Führungs-Vorsprung in den Zahnriemen hineinragt, wenn der jeweilige Führungs-Vorsprung in eine Ausnehmung eingreift. Es ist möglich, dass der Führungs-Vorsprung so groß ist, dass er den Riemenrücken erreicht oder sogar drüber hinausragt.

Unter der Rückendicke wird insbesondere der minimale Abstand des Zahngrundes des Zahnriemens von einem Punkt auf dem Riemenrücken verstanden. In anderen Worten ist die Rückendicke die Länge der kürzesten Verbindung zwischen dem Zahngrund und der Oberfläche des Riemenrückens.

Vorzugsweise entspricht eine Vorsprung-Breite der Führungs-Vorsprünge höchstens einer Nut-Breite der Nut. Auf diese Weise wird ein reibungsarmes Eingreifen der Führungs-Vorsprünge in die Ausnehmungen gewährleistet. Günstig ist es zudem, wenn die Vorsprung-Breite zumindest einem Drittel, besonders bevorzugt zumindest der Hälfte, der Nut-Breite entspricht.

Die Nut-Breite beträgt bevorzugt höchstens die Hälfte der Zahnriemenbreite, vorzugsweise höchstens ein Fünftel der Riemenbreite.

Günstig ist es, wenn die Führungs-Vorsprünge eine Vorsprung-Länge L₂₈ haben, die zumindest dem 0,8-fachen der Breite B₃₆ des Zahngrundes entspricht. Die Vorsprung-Länge ist die Bogenlänge eines Führungs-Vorsprunges entlang des Kopfkreises desjenigen Zahnkranzes, auf dessen Zähne er ausgebildet ist. Sind die Führungs-Vorsprünge nicht an einem der Zahnkränze ausgebildet, so ist die Vorsprung-Länge die Länge desjenigen Abschnitts, mit dem der Führungs-Vorsprung im Zahngrund in die Ausnehmungen eingreift.

Die Vorsprung-Länge L₂₈ entspricht insbesondere der Umfangslänge, die sich aus den Schnittpunkten (a) eines Kreisbogens eines Hüllkreises, dessen Mittelpunkt dem Mittelpunkt des Zahnkranzes entspricht und der die äußersten Konturen der Zähne des Zahnkranzes berührt und (b) der nach außen verlaufenden Verlängerung der linken und rechten Flankenkonturen des Zahnes des Zahnkranzes ergibt. Dies schließt nicht aus, dass die Vorsprung-Länge (L28) kleiner oder größer ist als die oben beschriebene ideale Länge. Zum Beispiel kann die Vorsprung-Länge um das 0,8-fache kleiner oder um das 1,1-fache größer sein, als die oben beschriebene ideale Vorsprung-Länge. Dabei ist die Vorsprung-Länge nicht größer als die Ausnehmungs-Länge L26.

Vorzugsweise hat der Riemenrücken einen ersten Laststrang und einen zweiten Laststrang, wobei die Laststränge durch die Nut voneinander getrennt sind. In anderen Worten existiert keine durchgängige Verbindung zwischen dem ersten Laststrang und dem zweiten Laststrang.

In anderen Worten besitzt der Riemenrücken eine erste Zugstranglage und eine zweite Zugstranglage, die durch die Nut voneinander getrennt sind. Die Nut erstreckt sich zwischen den beiden Zugstranglagen. Die Zugstranglagen können auch als Lastträgerlagen bezeichnet werden.

Die Nut-Tiefe ist vorzugsweise mindestens genauso hoch wie die Rückendicke, sodass eine Ausnehmung gebildet wird. Die Nut-Tiefe ist vorzugsweise kleiner als die Summe aus der Rückendicke d38 und dem 0,9-fachen, vorzugsweise dem 0,5-fachen, der Zahn-Höhe H34. In axialer Richtung sind die Zähne damit außerhalb des Zahngrundes durchgängig von einer Seite zur anderen. Die Lasttragfähigkeit der einzelnen Zähne wird kaum vermindert. Zusätzlich bleiben die beiden Lastträgerlagen durch die Zähne miteinander verbunden.

Selbstverständlich ist es möglich, dass der Riementrieb eine zweite Nut aufweist, die einen zweiten Nutgrund hat, wobei ein Teil der Ausnehmungen auch im zweiten Nutgrund verläuft. Besonders günstig ist es aber, wenn genau eine Nut vorhanden ist. Möglich sind des Weiteren auch mehr als zwei Nuten.

Erfindungsgemäße Zahnkränze können einstückig beispielsweise durch Druckguss, insbesondere Aluminium Druckguss, oder Spritzguss, insbesondere mit einem faserverstärktem Kunststoff, hergestellt werden.

Um die Fertigung zu vereinfachen ist es günstig, wenn ein Zahnkranz mit Führungs-vorsprüngen ein erstes Zahnkranzelement, ein zweites Zahnkranzelement und ein Führungselement aufweist, das in axialer Richtung zwischen dem ersten Zahnkranzelement und dem zweiten Zahnkranzelement angeordnet ist. Die Führungs-Vorsprünge sind dann nur am Führungselement ausgebildet. Bei diesen Zahnkränzen existieren keine Kehlungen, die gesondert bearbeitet werden müssten.

Es ist aber auch möglich, dass das Führungselement und der Zahnkranz aus verschiedenen Materialien bestehen können. Es ist beispielsweise möglich die Führungs-Vorsprünge nachträglich auf einen Zahnkranz aufzubringen. Hier sind die im Stand der Technik bekannten Methoden der Verbindungstechnik anzuwenden. So können Teile, die als Führung-Vorsprünge fungieren z.B. mittels Einsetzen von Spannstiften in Bohrungen, Schrauben in Gewinden oder Einkleben in Bohrungen auf den Zahnkranz aufgebracht werden. Dabei können die Teile radial außen eine für die Führung ideale Form aufweisen. Weiterhin ist es möglich einen einstückig ausgebildeten Zahnkranz mit einer Nut zu versehen, wobei dann zwei Zahnkranzsegmente gebildet werden. In die Nut des Zahnkranzes wird dann ein Führungselement eingebracht.

Vorzugsweise umfasst der Riementrieb eine weitere, beispielsweise dritte oder vierte, Riemenscheibe in Form einer Rückenrolle, die eine erste, insbesondere zylindermantelförmige, Tragfläche und eine zweite, insbesondere zylindermantelförmige, Tragfläche aufweist, wobei in axialer Richtung zwischen den Tragflächen die Führungs-Vorsprünge ausgebildet sind. Alternativ oder zusätzlich ist in axialer Richtung zwischen den Tragflächen ein über die Tragflächen radial überstehender Leit-Vorsprung ausgebildet, wobei der Leit-Vorsprung in die Nut eingreift und eine Leitvorsprung-Höhe über die Tragflächen hat. Die Leitvorsprung-Höhe entspricht vorzugsweise höchstens der Nut-Tiefe. Besonders günstig ist es, wenn die vierte Riemenscheibe zumindest einen Leit-Vorsprung pro Nut aufweist. Weiterhin alternativ weist der Leitvorsprung Führungs-Vorsprünge auf, die in die Ausnehmungen eingreifen. Es sei darauf hingewiesen, dass es möglich ist, dass eine vierte Riemenscheibe vorhanden ist, ohne dass eine dritte Riemenscheibe vorhanden ist. Weiterhin kann die Rückenrolle so ausgebildet sein, dass kleine oder keine Tragflächen vorhanden sind. Dabei stützt sich der Zahnriemen auf dem Leitvorsprung im Nutgrund ab.

Günstig ist es, wenn der Zahnriemen eine Textillage aufweist, die auf der dem Antriebs-Zahnkranz zugewandten Seite ausgebildet ist. Eine derartige Textillage verringert die Reibung und erhöht die Festigkeit des Zahnriemens.

Gemäß einer bevorzugten Ausführungsform verlaufen dass die Ausnehmungen von einer Rückenseite des Zahnriemens auf eine der Rückenseite gegenüberliegende Zahnseite des Zahnriemens verlaufen, In anderen Worten durchsetzen die Ausnehmungen den Zahnriemen.

Vorzugsweise führen die Führungs-Vorsprünge den Zahnriemen in axialer Richtung. In anderen Worten setzen die Führungs-Vorsprünge einer Kraft, die den Zahnriemen von seiner Bahn nach axial außen abdrängt, eine Führungskraft entgegen, die das Abdrängen verhindert. Insbesondere führen ausschließlich die Führungs-Vorsprünge den Zahnriemen in axialer Richtung. In anderen Worten existiert in diesem Fall kein weiteres Bauteil, das für sich allein, also bei nicht vorhandenen Führungs-Vorsprüngen. die axiale Führung bewirken könnte.

Erfindungsgemäß ist zudem ein Fahrzeug, insbesondere Fahrrad, mit (a) einem erfindungsgemäßen Riementrieb, (b) einer Tretkurbel, die mit dem Antriebs-Zahnkranz verbunden ist, und (c) einem Hinterrad, das mit dem Abtriebs-Zahnkranz verbunden ist, wobei der Zahnriemen des Riementriebs den Antriebs-Zahnkranz mit dem Abtriebs-Zahnkranz verbindet und einen Riemenrücken hat, der eine Vielzahl an Ausnehmungen aufweist, wobei die Ausnehmungen jeweils in einem Zahngrund ausgebildet sind. Die Vorsprünge des Antriebs-Zahnkranzes und/oder des Abtriebs-Zahnkranzes sind zum Eingreifen in die Ausnehmungen angeordnet. Vorzugsweise sind am Antriebs-Zahnkranz und/oder am Abtriebs-Zahnkranz Führungs-Vorsprünge zum Eingreifen in die Ausnehmungen ausgebildet. Das Fahrzeug muss jedoch kein Fahrrad sein, es kann sich insbesondere auch um ein Motorrad oder sonstiges Kraftfahrzeug handeln.

Im Folgenden wird die Erfindung anhand der beigefügten Zeichnungen näher erläutert. Dabei zeigt:
- Figur 1: ein erfindungsgemäßes Fahrzeug in Form eines Fahrrads,
- Figur 2a: eine perspektivische Teilansicht eines erfindungsgemäßen Riementriebs,
- Figur 2b: eine zweite perspektivische Teilansicht eines erfindungsgemäßen Riementriebs,
- Figur 3a: eine perspektivische Teilansicht einer dritten Riemenscheibe in Form einer Innenrolle für einen erfindungsgemäßen Riementrieb,
- Figur 3b: eine zweite perspektivische Teilansicht der dritten Riemenscheibe gemäß Figur 3a,
- Figur 4a: eine Seitenansicht auf einen Zahnkranz mit Riemen eines erfindungsgemäßen Riementriebs teilweise im Schnitt,
- Figur 4b: eine Ansicht auf die Stirnseite des Zahnkranzes gemäß Figur 4a,
- Figur 4c: eine Teil-Seitenansicht auf den Zahnriemen des Riementriebs,
- Figur 4d: eine Schnitt Ansicht A-A gemäß Figur 4a,
- Figur 4e: eine Schnittansicht B-B gemäß Figur 4a und
- Figur 5: Ansichten einer Rückenrolle gemäß Figur 1.

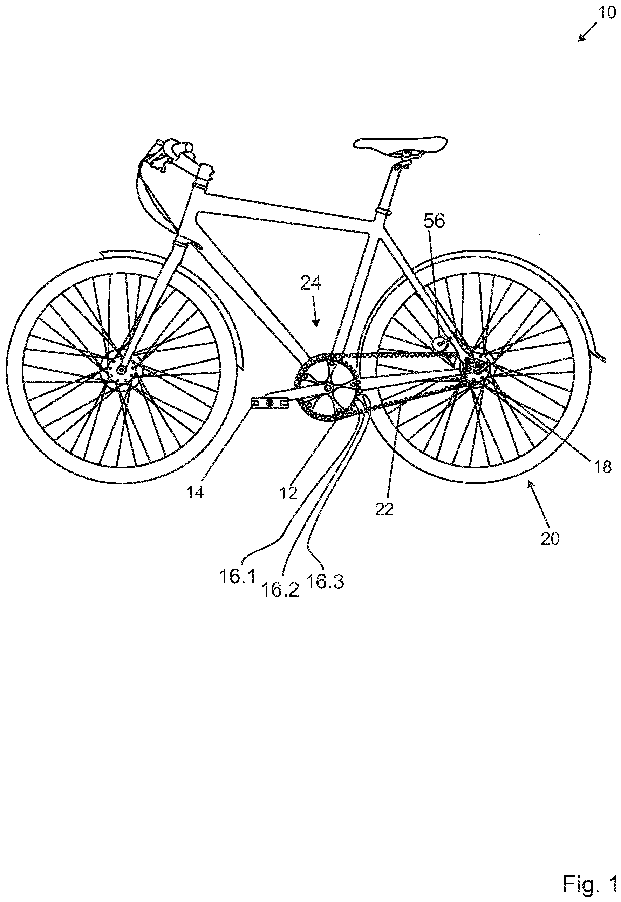

Figur 1 zeigt ein erfindungsgemäßes Fahrzeug in Form eines Fahrrades 10, das eine schematisch gezeichnete erste Riemenscheibe 12 in Form eines Antriebs-Zahnkranzes aufweist, der mit einer Tretkurbel 14 verbunden ist. Der Antriebs-Zahnkranz 12 besitzt eine Mehrzahl an Antriebs-Zähnen 16.i (i = 1, 2, ..., N, wobei N die Anzahl der Antriebs-Zähne ist).

Das Fahrrad 10 besitzt zudem eine zweite Riemenscheibe 18 in Form eines Abtriebs-Zahnkranzes, der mit einem Hinterrad 20 verbunden ist. Die beiden Riemenscheiben 12, 18 sind mittels eines Zahnriemens 22 miteinander zu einem Riementrieb 24 verbunden. Es sei darauf hingewiesen, dass der Riementrieb 24 auch für andere Fahrzeuge als ein Fahrrad geeignet ist, beispielsweise für Kraftfahrzeuge, Motorräder oder Ähnliches. Ganz allgemein ist der Riementrieb 24 für jegliche Antriebe in Leistungsantrieben, Linearantrieben und Förderantrieben geeignet.

Die Erfindung wird beispielhaft an einem Abtriebs-Zahnkranz erläutert, sie ist jedoch gleichermaßen auf eine andere Riemenscheibe oder weitere Riemenscheiben des Riementriebs anwendbar.

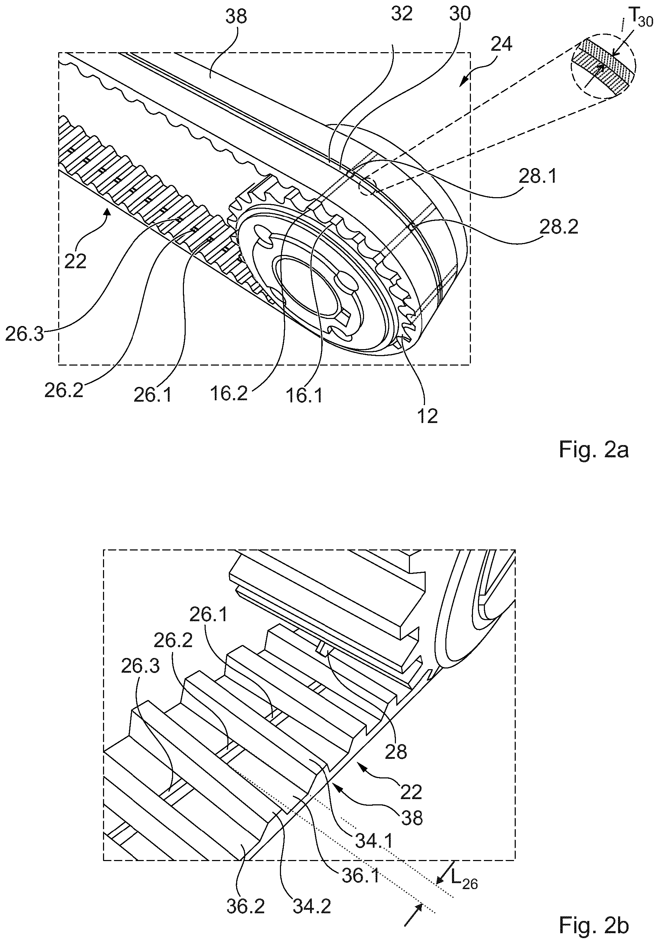

Figur 2a zeigt eine Detailansicht des Riementriebs 24. Es ist zu erkennen, dass der Zahnriemen 22 eine Vielzahl an Ausnehmungen 26.j (j = 1, 2, ..., J) aufweist. Der Antriebs-Zahnkranz 12 besitzt Führungs-Vorsprünge 28.k (k = 1, 2, ..., K), die zum Eingreifen in jeweils eine Ausnehmung 26.j ausgebildet sind.

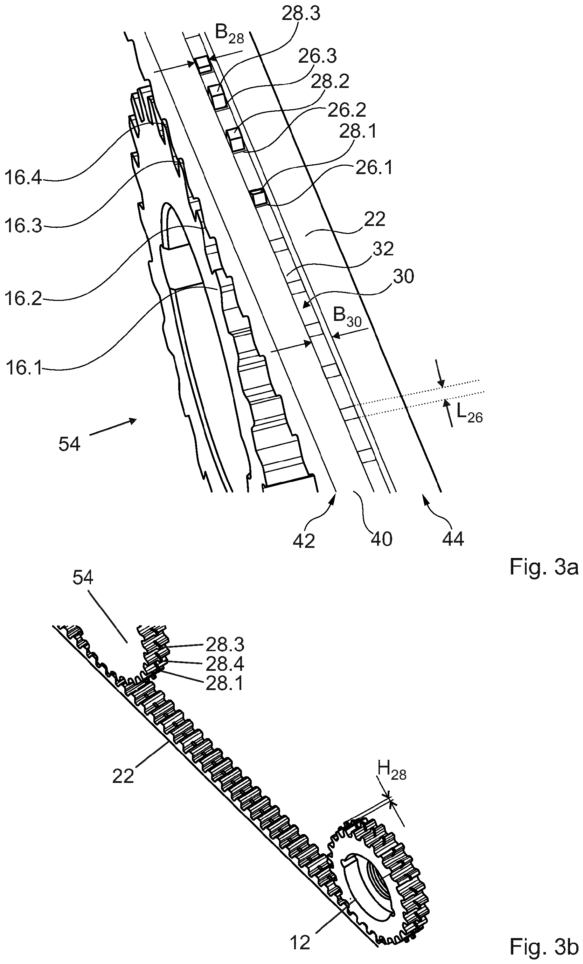

Figur 2a und Figur 3a zeigen, dass der Zahnriemen 22 eine Nut 30 besitzt, in deren Nutgrund 32 die Ausnehmungen 26 ausgebildet sind.

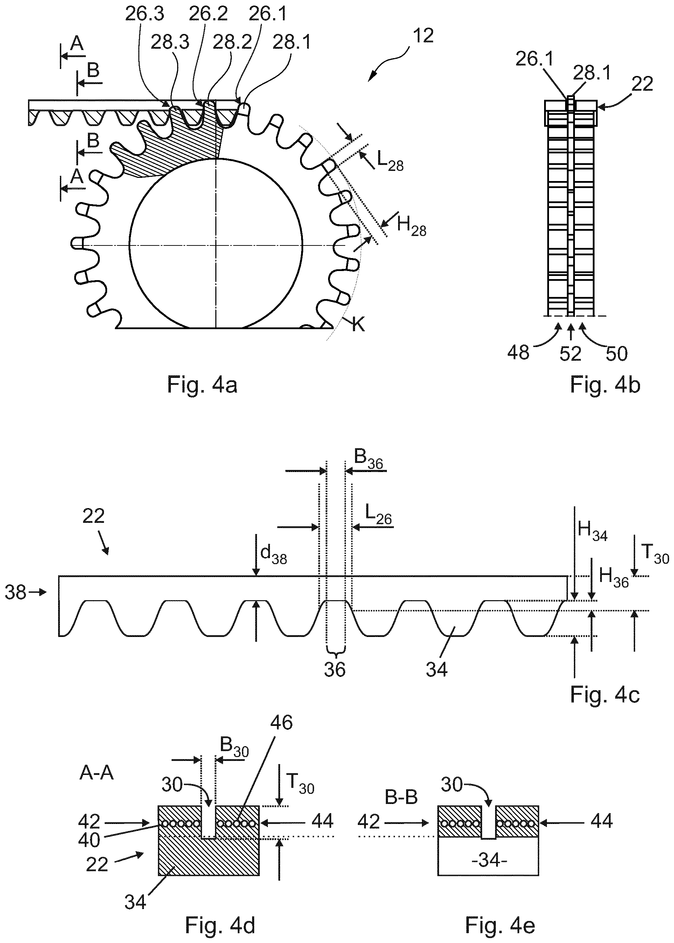

Figur 2b zeigt, dass zwischen je zwei Zähnen 34.1, 34.2, ... des Zahnriemens 22 ein Zahngrund 36, im vorliegenden Fall beispielsweise der Zahngrund 36.1, angeordnet ist. Eine Nut-Tiefe T₃₀ (vgl. Figur 4d) ist so groß, dass die Nut 30 sich in den Zahngrund 36 fortsetzt (Bezugszeichen ohne Zählsuffix beziehen sich jeweils auf alle entsprechenden Objekte). Die Ausnehmungen 26.j können folglich einfach dadurch hergestellt werden, dass die Nut 30 (vgl. Figur 2a) hinreichend tief in einen Riemenrücken 38 des Zahnriemens 22 eingebracht wird.

Figur 3a zeigt eine Innenrolle 54, die wie der Antriebs-Zahnkranz 12 aufgebaut ist, mit dem Zahnriemen 22 in einer anderen Perspektive. Es ist zu erkennen, dass in der in Figur 3a gezeigten Ausführungsform jeder Antriebs-Zahn 16. i einen Führungs-Vorsprung 28.k besitzt, der in eine jeweilige Ausnehmung 26.j eingreift. Eine Vorsprung-Breite B₂₈ entspricht dem 0,9-fachen einer Nut-Breite B₃₀ (vgl. Figur 4d). Eine Vorsprung-Höhe H₂₈ (vgl. Figur 3b) entspricht im vorliegenden Fall der Nut-Tiefe T₃₀, weicht also insbesondere um höchstens 10 % davon ab.

Eine Ausnehmungs-Länge L₂₆ ergibt sich aus der Nut-Tiefe im Zahn des Zahnriemens H₃₆ und entspricht im vorliegenden Fall zumindest der Zahngrund-Breite B₃₆. Die maximale Ausnehmungslänge ergibt sich aus einer Nut-Tiefe, die kleiner ist als die Summe aus der Rückendicke d₃₈ und dem 0,9-fachen der Zahn-Höhe H₃₄.

Figur 3b zeigt einen Ausschnitt aus einer zweiten Ausführungsform eines erfindungsgemäßen Riementriebs, der eine Innenrolle 54 aufweist. Im vorliegenden Fall sind an der Innenrolle 54 ebenfalls Führungs-Vorsprünge 28.k ausgebildet. Der Zahnriemen 22 ist nur teilweise eingezeichnet. Der Teil, der die erste Riemenscheibe 12 umschlingt, ist weggelassen.

Die Innenrolle 54 kann so ausgebildet sein, wie im Folgenden am Beispiel eines Zahnkranzes beschrieben. Alternativ kann die Innenrolle ohne Verzahnung mit zylindermantelförmigen Tragflächen ausgeführt werden. Alternativ kann die Innenrolle ausschließlich aus einem Führungselement bestehen. Dann gibt es keine zylindermantelförmigen Tragflächen.

Figur 4b zeigt eine bevorzugte Ausführungsform einer Riemenscheibe 12, die als Zahnkranz ausgebildet ist und ein erstes Zahnkranzelement 48, ein davon unabhängiges zweites Zahnkranzelement 50 und ein zwischen den beiden Zahnkranzelementen 48, 50 angeordnetes Führungselement 52 aufweist. Am Führungselement 52 sind die Führungs-Vorsprünge 28.k (vgl. Figur 4a) ausgebildet. Die Zahnkranzelemente 48, 50 und das Führungselement 52 sind miteinander verbunden, beispielsweise verklebt, formschlüssig verbunden oder beispielsweise verschraubt. Es ist zudem möglich, dass die Zahnkranzelemente 48, 50 und das Führungselement 52 stoffschlüssig dadurch miteinander verbunden sind, dass sie an ihrer Oberfläche aufgeschmolzen und dann zusammengepresst wurden. In diesem Fall ergibt sich eine klebstofffreie stoffschlüssige Verbindung. Das Führungselement 52 kann unterhalb eines Führungs-Vorsprungs oder mehreren Führungs-Vorsprüngen eine von den Zahnkranzelementen 48, 50 abweichende äußere Formkontur aufweisen.

Die Vorsprung-Länge L₂₈ entspricht der Umfangslänge, die sich aus den Schnittpunkten (a) eines Kreisbogens eines Hüllkreises, dessen Mittelpunkt dem Mittelpunkt des Zahnkranzes entspricht und der die äußersten Konturen der Zähne des Zahnkranzes berührt und (b) der nach außen verlaufenden Verlängerung der linken und rechten Flankenkonturen des Zahnes des Zahnkranzes ergibt.

Figur 4a zeigt wie der Zahnriemen mit dem Zahnkranz zusammenwirkt und in der Schnittansicht wie die Führungs-Vorsprünge 28 zwischen die Zähne 34 und in die Ausnehmungen 26 (vergl. Fig. 2b) eingreifen.

Figur 4c zeigt eine Seitenansicht des Zahnriemens 22. Es ist zu erkennen, dass der Zahnriemen einen Riemenrücken 38 mit einer Rückendicke d₃₈, Zähne mit einer Zahn-Höhe H₃₄ und einen Zahngrund 36 mit einer Zahngrund-Breite B36 aufweist. Angedeutet ist weiterhin ein Nutgrund 32 und eine Ausnehmung 26 mit einer Ausnehmungs-Länge L₂₆.

Figur 4d zeigt einen Querschnitt A-A gemäß Figur 4a durch den Zahnriemen 22, das heißt durch einen Zahn.

In Figur 4d ist schematisch ein erster Laststrang 40 des Zahnriemens 22 eingezeichnet, der beispielsweise aus Aramid oder Carbonfasern besteht und eine Lastträgerlage 42 bildet. Von der Lastträgerlage 42 getrennt ist eine zweite Lastträgerlage 44, die von einem zweiten Laststrang 46 aufgebaut wird. Die Nut 30 trennt die beiden Lastträgerlagen 42, 44 voneinander.

Figur 4e ist ein Querschnitt B-B gemäß Figur 4a. Es ist zu erkennen, dass sich die Nut bis in den Zahngrund 36 (vgl. 4c) fortsetzt, sodass beim Schnitt durch den Zahngrund, wie er in Figur 4e gezeigt ist, der Zahn 34, der nicht schraffiert eingezeichnet ist, in axialer Richtung durchgängig ist.

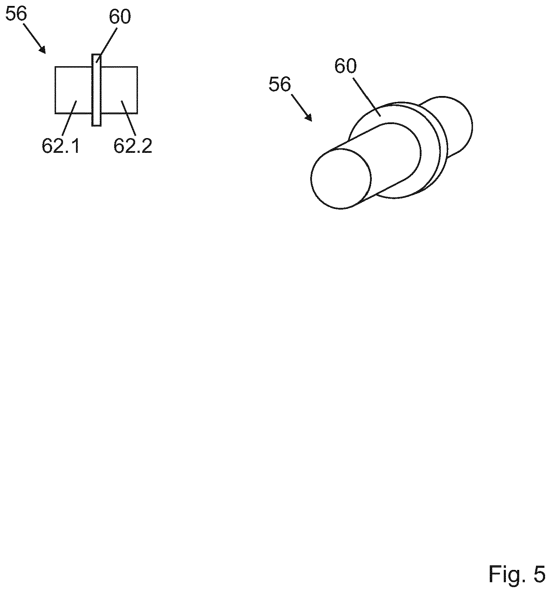

Figur 5 zeigt eine Rückenrolle 56, die optional vorhanden sein kann. Diese Rückenrolle kann einen Leit-Vorsprung 60 aufweisen, der in axialer Richtung zwischen zwei Tragflächen 62.1, 62.2 ausgebildet ist und radial über die Tragflächen übersteht. Eine Leitvorsprung-Höhe des Leitvorsprungs 60 beträgt höchstens die Nut-Tiefe. Der Leit-Vorsprung greift so in die Nut ein und führt den Zahnriemen 22. Es ist auch möglich, dass die Rückenrolle 56 Führungs-Vorsprünge aufweist, die über den Leit-Vorsprung in axialer Richtung überstehen. In Figur 1 ist die Rückenrolle 56 in Kontakt mit dem belasteten Trum eingezeichnet. Besonders günstig ist es, wenn die Rückenrolle 56 am entlasteten Trum anliegt.

**Bezugszeichenliste**

| | | | |
|---|---|---|---|
| 10 | Fahrrad | | |
| 12 | erste Riemenscheibe, | i | Zählindex |
| | Antriebs-Zahnkranz | j | Zählindex |
| 14 | Tretkurbel | k | Zählindex |
| 16 | Antriebs-Zahn | T₃₀ | Nut-Tiefe |
| 18 | zweite Riemenscheibe Abtriebs-Zahnkranz | B₂₈ | Vorsprung-Breite |
| | | B₃₆ | Zahngrund-Breite |
| 20 | Hinterrad | B₃₀ | Nut-Breite |
| 22 | Zahnriemen | H₂₈ | Vorsprung-Höhe |
| 24 | Riementrieb | K | Hüllkreis |
| 26 | Ausnehmung | | |
| 28 | Führungs-Vorsprung | L₂₆ | Ausnehmungs-Länge |
| | | L28 | Vorsprung-Länge |
| 30 | Nut | d₃₈ | Rückendicke |
| 32 | Nutgrund | H₃₄ | Zahn-Höhe |
| 34 | Zahn (des Zahnriemens) | H₃₆ | Nut-Tiefe im Zahn des Zahnrie-mens |
| 36 | Zahngrund (des Zahnriemens) | | |
| 38 | Riemenrücken | | |
| 40 | erster Laststrang | | |
| 42 | erste Lastträgerlage | | |
| 44 | zweite Lastträgerlage | | |
| 46 | zweiter Laststrang | | |
| 48 | erstes Zahnkranzelement | | |
| 50 | zweites Zahnkranzelement | | |
| 52 | Führungselement | | |
| 54 | Innenrolle | | |
| 56 | Rückenrolle | | |
| 60 | Leitvorsprung | | |
| 62 | Tragflächen | | |

## Patentansprüche

1. Riementrieb (24) mit
(a) einer ersten Riemenscheibe (12) in Form eines Antriebs-Zahnkranzes, der Antriebs-Zähne (16) hat,
(b) einer zweiten Riemenscheibe in Form eines Abtriebs-Zahnkranzes (18) und
(c) einem Zahnriemen (22), der
(i) den Antriebs-Zahnkranz (12) und den Abtriebs-Zahnkranz (18) zum Übertragen einer Kraft verbindet und
(ii) einen Riemenrücken (38) und
(iii) eine Vielzahl an Zähnen (34) hat, wobei sich zwischen zwei benachbarten Zähnen ein Zahngrund (36) befindet, und
(d) der Zahnriemen (22) eine Vielzahl an Ausnehmungen (26), die den Riemenrücken des Zahnriemens (22) lokal vollständig durchsetzen und die jeweils in einem Zahngrund (36) ausgebildet sind, **dadurch gekennzeichnet, dass**
(e) zumindest eine Riemenscheibe Führungs-Vorsprünge (28) zum Eingreifen in die Ausnehmungen (26) aufweist.

2. Riementrieb (24) nach Anspruch 1, **dadurch gekennzeichnet, dass**
(a) der Riemenrücken (38) eine in Umfangsrichtung verlaufende Nut (30) aufweist und
(b) die Ausnehmungen (26) in einem Nutgrund (32) der Nut (30) verlaufen.

3. Riementrieb (24) nach einem der vorstehenden Ansprüche, **dadurch gekennzeichnet, dass**
(a) der Antriebs-Zahnkranz (12) Antriebs-Zähne (16) aufweist, auf denen die Führungs-Vorsprünge (28) angeordnet sind und/oder
(b) der Abtriebs-Zahnkranz (18) Abtriebs-Zähne aufweist, auf denen die Führungs-Vorsprünge (28) angeordnet sind.

4. Riementrieb (24) nach einem der vorstehenden Ansprüche, **gekennzeichnet durch** eine dritte Riemenscheibe in Form einer Innenrolle (54), die Führungs-Vorsprünge aufweist.

5. Riementrieb (24) nach einem der vorstehenden Ansprüche, **dadurch gekennzeichnet, dass** die Führungs-Vorsprünge
(a) eine Vorsprung-Höhe (H₂₈) in radialer Richtung haben, die zumindest dem 0,1-fachen, insbesondere zumindest dem 0,8-fachen, einer Rückendicke des Riemenrückens entspricht, und/oder
(b) eine Vorsprung-Länge (L₂₈) haben, die zumindest der Hälfte, insbesondere zumindest dem 0,8-fachen, der Breite (B₃₆) des Zahngrundes (36) entspricht.

6. Riementrieb (24) nach einem der vorstehenden Ansprüche, **dadurch gekennzeichnet, dass** der Riemenrücken (38)
(a) einen ersten Laststrang (40) und einen zweiten Laststrang (46) aufweist und dass die Laststränge durch die Nut (30) voneinander getrennt sind und/oder
(b) eine erste Lastträgerlage (42) und eine zweite Lastträgerlage (44) hat, die durch die Nut (30) voneinander getrennt sind.

7. Riementrieb (24) nach einem der vorstehenden Ansprüche, **dadurch gekennzeichnet, dass** die Nut (30) eine Nut-Tiefe (T₃₀) hat, die größer ist als eine Rückendicke (d₃₈) des Riemenrückens (38) oder zumindest die Summe aus Rückendicke (d₃₈) und dem 0,1-fachen der Zahn-Höhe (H34).

8. Riementrieb (24) nach einem der vorstehenden Ansprüche, **dadurch gekennzeichnet, dass**
(a) zumindest einer der Zahnkränze
- ein erstes Zahnkranzelement (48),
- ein zweites Zahnkranzelement (50) und
- ein Führungselement (52), das in axialer Richtung zwischen dem ersten Zahnkranzelement (48) und dem zweiten Zahnkranzelement (50) angeordnet ist, aufweist,
(b) die Führungs-Vorsprünge (28) nur am Führungselement (52) ausgebildet sind.

9. Riementrieb (24) nach einem der vorstehenden Ansprüche, **gekennzeichnet durch**
(a) eine vierte Riemenscheibe in Form einer Rückenrolle (56), die eine erste, insbesondere zylindermantelförmige, Tragfläche (62.1) und eine zweite, insbesondere zylindermantelförmige, Tragfläche (62.2) aufweist,
(b) wobei die Führungs-Vorsprünge (28) in axialer Richtung zwischen den Tragflächen angeordnet sind und über die Tragflächen radial überstehen und
(c) wobei die Führungs-Vorsprünge (28) in die Nut (30) eingreifen.

10. Riementrieb (24) nach einem der vorstehenden Ansprüche, **dadurch gekennzeichnet, dass** die Führungs-Vorsprünge (28) nutzlastfrei in die Ausnehmungen (26) eingreifen.

11. Riementrieb (24) nach einem der vorstehenden Ansprüche, **dadurch gekennzeichnet, dass** die Führungs-Vorsprünge (28) den Zahnriemen (22) in axialer Richtung führen.

12. 10. Riementrieb (24) nach einem der vorstehenden Ansprüche, **dadurch gekennzeichnet, dass** ausschließlich die Führungs-Vorsprünge (28) den Zahnriemen (22) in axialer Richtung führen.

13. Fahrzeug, insbesondere Fahrrad (10), mit
(a) einem Riementrieb (24) nach einem der Ansprüche 1 bis 9,
(b) einer Tretkurbel (14), die mit dem Antriebs-Zahnkranz (12) verbunden ist, und
(c) einem Hinterrad (20), das mit dem Abtriebs-Zahnkranz (18) verbunden ist.

## Claims

1. A belt drive (24) with
(a) a first pulley wheel (12) in the form of a drive sprocket with drive teeth (16),
(b) a second pulley wheel in the form of an output sprocket (18) and
(c) a toothed belt (22), which
(i) connects the drive sprocket (12) and the output sprocket (18) for transmitting a force and
(ii) has a belt back (38) and
(iii) a plurality of teeth (34), wherein a tooth base (36) is situated between two adjacent teeth,
and
(d) the toothed belt (22) has a plurality of recesses (26) which locally completely penetrate the belt back of the toothed belt (22) and each of which is configured in a tooth base (36), **characterised in that**
(e) at least one pulley wheel comprises guide projections (28) for engaging in the recesses (26).

2. The belt drive (24) according to claim 1, **characterised in that**
(a) the belt back (38) has a groove (30) that extends in the circumferential direction and
(b) the recesses (26) extend in a groove base (32) of the groove (30).

3. The belt drive (24) according to one of the preceding claims, **characterised in that**
(a) the drive sprocket (12) features drive teeth (16) on which the guide projections (28) are arranged and/or
(b) the output sprocket (18) features output teeth (16) on which the guide projections (28) are arranged.

4. The belt drive (24) according to one of the preceding claims, **characterised by** a third pulley wheel in the form of an inner roller (54), which has guide projections.

5. The belt drive (24) according to one of the preceding claims, **characterised in that** the guide projections
(a) have a projection height (H₂₈) in the radial direction that corresponds to at least 0.1-times, in particular at least 0.8-times, a back thickness of the belt back, and/or
(b) have a projection length (L₂₈) that corresponds to at least half, in particular at least 0.8-times, the width (B₃₆) of the tooth base (36).

6. The belt drive (24) according to one of the preceding claims, **characterised in that** the belt back (38)
(a) comprises a first load cord (40) and a second load cord (46), and that the load cords are separated by the groove (30), and/or
(b) has a first load support layer (42) and a second load support layer (44), which are separated by the groove (30).

7. The belt drive (24) according to one of the preceding claims, **characterised in that** the groove (30) has a groove depth (T₃₀) which
is greater than a back thickness (d₃₈) of the belt back (38) or
is at least the sum of the back thickness (d₃₈) and 0.1-times the tooth height (H34).

8. The belt drive (24) according to one of the preceding claims, **characterised in that**
(a) at least one of the sprockets comprises
- a first sprocket element (48),
- a second sprocket element (50) and
- a guide element (52), which is arranged in the axial direction between the first sprocket element (48) and the second sprocket element (50),
(b) the guide projections (28) are only configured on the guide element (52).

9. The belt drive (24) according to one of the preceding claims, **characterised by**
(a) a fourth pulley wheel in the form of a rear roller (56), which features a first, in particular a cylinder barrel-shaped, support surface (62.1) and a second, in particular a cylinder barrel-shaped, support surface (62.2),
(b) wherein the guide projections (28) are arranged in the axial direction between the support surfaces and protrude radially beyond the support surfaces and
(c) wherein the guide projections (28) engage in the groove (30).

10. The belt drive (24) according to one of the preceding claims, **characterised in that** the guide projections (28) engage in the recesses (26) in a main load-free manner.

11. The belt drive (24) according to one of the preceding claims, **characterised in that** the guide projections (28) guide the toothed belt (22) in the axial direction.

12. The belt drive (24) according to one of the preceding claims, **characterised in that** only the guide projections (28) guide the toothed belt (22) in the axial direction.

13. A vehicle, in particular a bicycle (10), with
(a) a belt drive (24) according to one of the claims 1 to 9,
(b) a pedal crank (14), which is connected to the drive sprocket (12), and
(c) a rear wheel (20), which is connected to the output sprocket (18).

## Revendications

1. Entrainement par courroie (24) comprenant
(a) une première poulie (12) sous la forme d'une couronne dentée d'entrée qui a des dents d'entrée (16),
(b) une deuxième poulie sous la forme d'une couronne dentée de sortie (18) et
(c) une courroie dentée (22) qui
(i) relie la couronne dentée d'entrée (12) et la couronne dentée de sortie (18) pour transmettre une force, et qui
(ii) comprend un dos de courroie (38) et
(iii) une pluralité de dents (34), un fond de dent (36) étant situé entre deux dents adjacentes,
et
(d) la courroie dentée (22) comprenant une pluralité d'évidements (26) qui traversent localement complètement le dos de courroie de la courroie dentée (22) et qui sont ménagés chacun dans un fond de dent (36), **caractérisé en ce que**
(e) au moins une poulie présente des saillies de guidage (28) destinées à s'engager dans les évidements (26).

2. Entrainement par courroie (24) selon la revendication 1, **caractérisé en ce que**
(a) le dos de courroie (38) présente une rainure (30) s'étendant dans la direction circonférentielle et
(b) les évidements (26) s'étendent dans un fond de rainure (32) de la rainure (30).

3. Entrainement par courroie (24) selon l'une des revendications précédentes, **caractérisé en ce que**
(a) la couronne dentée d'entrée (12) présente des dents d'entrée (16) sur lesquelles sont disposées les saillies de guidage (28), et/ou
(b) la couronne dentée de sortie (18) présente des dents de sortie sur lesquelles sont disposées les saillies de guidage (28).

4. Entrainement par courroie (24) selon l'une des revendications précédentes, **caractérisé par** une troisième poulie sous la forme d'un rouleau intérieur (54) qui présente des saillies de guidage.

5. Entrainement par courroie (24) selon l'une des revendications précédentes, **caractérisé en ce que** les saillies de guidage
(a) ont une hauteur de saillie (H₂₈) dans la direction radiale, qui correspond à au moins 0,1 fois, en particulier à au moins 0,8 fois, l'épaisseur du dos de la courroie, et/ou
(b) ont une longueur de saillie (L₂₈) qui correspond à au moins la moitié, en particulier à au moins 0,8 fois, la largeur (B₃₆) du fond de dent (36).

6. Entrainement par courroie (24) selon l'une des revendications précédentes, **caractérisé en ce que** le dos de courroie (38) comprend
(a) un premier brin de charge (40) et un deuxième brin de charge (46), et les brins de charge sont séparés l'un de l'autre par la rainure (30), et/ou
(b) une première couche de support de charge (42) et une deuxième couche de support de charge (44) qui sont séparées l'une de l'autre par la rainure (30).

7. Entrainement par courroie (24) selon l'une des revendications précédentes, **caractérisé en ce que** la rainure (30) a une profondeur de rainure (T₃₀) qui est supérieure à l'épaisseur de dos (d₃₈) du dos de courroie (38) ou au moins à la somme de l'épaisseur de dos (d₃₈) et de 0,1 fois la hauteur de dent (H₃₄).

8. Entrainement par courroie (24) selon l'une des revendications précédentes, **caractérisé en ce que**
(a) l'une au moins des couronnes dentées comprend
- un premier élément de couronne dentée (48),
- un deuxième élément de couronne dentée (50) et
- un élément de guidage (52) qui est disposé dans la direction axiale entre le premier élément de couronne dentée (48) et le deuxième élément de couronne dentée (50),
(b) les saillies de guidage (28) sont formées uniquement sur l'élément de guidage (52).

9. Entrainement par courroie (24) selon l'une des revendications précédentes, **caractérisé par**
(a) une quatrième poulie sous la forme d'un rouleau de dos (56) qui présente une première surface de support (62.1), en particulier en forme d'enveloppe cylindrique, et une deuxième surface de support (62.2), en particulier en forme d'enveloppe cylindrique,
(b) les saillies de guidage (28) étant disposées dans la direction axiale entre les surfaces de support et dépassant radialement au-delà des surfaces de support, et
(c) les saillies de guidage (28) s'engageant dans la rainure (30).

10. Entrainement par courroie (24) selon l'une des revendications précédentes, **caractérisé en ce que** les saillies de guidage (28) s'engagent sans charge utile dans les évidements (26).

11. Entrainement par courroie (24) selon l'une des revendications précédentes, **caractérisé en ce que** les saillies de guidage (28) guident la courroie dentée (22) dans la direction axiale.

12. Entrainement par courroie (24) selon l'une des revendications précédentes, **caractérisé en ce que** seules les saillies de guidage (28) guident la courroie dentée (22) dans la direction axiale.

13. Véhicule, en particulier vélo (10), comprenant
(a) un entrainement par courroie (24) selon l'une des revendications 1 à 9,
(b) un pédalier (14) relié à la couronne dentée d'entrée (12), et
(c) une roue arrière (20) reliée à la couronne dentée de sortie (18).
